# FASCICULE DE BREVET EUROPEEN

(11) **EP 3 722 012 B1**
(45) Date de publication et mention de la délivrance du brevet: **16.06.2021**
(21) Numéro de dépôt: 20167500.6
(22) Date de dépôt: 01.04.2020
(51) Int. Cl.: B07C 5/36, B07C 3/08, B65G 47/38

(54) **MUTUALISATION DE SORTIES DE TRIEURS DE COLIS**
ZUSAMMENLEGUNG DER AUSGÄNGE VON PAKET-SORTIERERN
POOLING OF OUTPUTS OF PARCEL SORTERS

(30) Priorité: 10.04.2019 FR 1903821
(43) Date de publication de la demande: 14.10.2020
(73) Titulaire: Solystic, 92220 Bagneux (FR)
(72) Inventeur: CHIROL, Luc, 75016 Paris (FR); VOLTA, Bruno, 91190 Gif sur Yvette (FR)
(74) Mandataire: Prugneau, Philippe

(56) Documents cités:
- WO-A1-2005/025764
- DE-A1- 19 757 963
- US-B1- 8 919 529

## Description

### Domaine technique

L'invention concerne le domaine des systèmes de tri de colis.

### Technique antérieure

Afin de recevoir des colis en provenance de diverses sources d'approvisionnement et les distribuer vers un grand nombre de destinataires, des centres de tri sont équipés de systèmes automatisés de tri de colis.

Comme décrit dans la demande internationale de brevet WO 2018/115608 et dans le brevet US 8,919,529 B1, un équipement automatisé de tri de colis peut comprendre un convoyeur sur lequel des colis à trier sont convoyés sous contrôle d'une unité de contrôle-commande vers des réceptacles situés au niveau de sorties de tri et correspondant à des adresses de destination desdits colis, les sorties de tri étant réparties le long du convoyeur.

Le brevet US 8,919,529 B1 décrit en outre que chaque sortie de tri est mutualisée entre deux réceptacles dont un seul se trouve à une position de réception des colis.

Avec l'augmentation actuelle du volume des achats à distance par des particuliers, en particulier par l'intermédiaire de plates-formes internet, et donc avec l'augmentation parallèle des volumes de distribution à un grand nombre de destinataires, les opérateurs postaux ou de distribution de colis en général sont confrontés au tri et à la manutention d'un très grand nombre de petits colis à destination d'un grand nombre d'adresses de distribution.

Pour répondre à ces besoins, une simple augmentation de taille et du nombre de sorties des trieurs classiques se heurte aux obstacles que constituent l'empreinte au sol, la manutention des réceptacles en sortie, ainsi que le coût.

### Exposé de l'invention

La présente invention a pour objet un équipement de tri contribuant à résoudre les problèmes mentionnés ci-dessus et repose en particulier sur le principe de mutualisation des sorties de tri entre plusieurs destinations.

A cet effet, l'invention a pour objet un équipement de tri de colis comprenant un convoyeur sur lequel des colis à trier sont convoyés, sous contrôle d'une unité de contrôle-commande, vers des réceptacles situés au niveau de sorties de tri et correspondant à des adresses de destination desdits colis, les sorties de tri étant réparties le long du convoyeur, équipement dans lequel que chaque sortie de tri est mutualisée entre plusieurs des réceptacles dont un seul se trouve à une position de réception des colis, en ce qu'un dispositif d'échange des réceptacles est affecté à chaque sortie et est configuré pour échanger celui des réceptacles à la position de réception d'une sortie donnée pour un autre des réceptacles mutualisant cette sortie, et en ce que l'équipement de tri anticipe l'arrivée d'un coli à cette sortie au moyen de l'unité de contrôle-commande qui détermine quel réceptacle parmi les réceptacles affectés à cette sortie est associé à une destination du coli et quel réceptacle est un réceptacle courant placé à la position de réception de cette sortie, qui teste si le réceptacle associé à la destination du coli est le réceptacle courant, et, en réponse à un résultat négatif à ce test, ordonne au dispositif d'échange affecté à cette sortie de placer le réceptacle associé à la destination du coli à la position de réception à la place du réceptacle courant.

Grâce à la mutualisation des sorties de tri entre plusieurs adresses et plusieurs réceptacles associés à ces adresses, l'équipement de tri selon l'invention multiplie les destinations physiques effectives correspondant chacune à une adresse ou un lot d'adresses pour un nombre fixe de sorties physiques correspondant chacune à une sortie de tri d'un convoyeur.

Si par exemple une sortie de tri donnée est mutualisée entre quatre réceptacles chacun associés à une ou plusieurs adresses de destination des colis triés, on aura alors quatre fois plus de destinations effectives que de sorties physiques du convoyeur, lesquelles sorties physiques étant celles qui impactent directement l'empreinte au sol et le volume de l'infrastructure fixe constituant l'équipement de tri.

Dans cet exemple, et en première approximation, l'équipement de tri selon l'invention pourra desservir quatre fois plus d'adresses de destination pour une emprise au sol équivalente à celle d'équipement de tri classique.

L'équipement de tri de colis selon l'invention peut avantageusement présenter les caractéristiques suivantes :
- le convoyeur est un convoyeur en boucle ;
- pour chaque sortie, des chariots gigognes portant chacun l'un des réceptacles sont situés sous les sorties de tri, et en ce que les dispositifs d'échange de réceptacles sont configurés de manière à déplacer sélectivement les chariots-gigognes pour mettre lesdits réceptacles à la position de réception de colis de la sortie correspondante sur commande de l'unité de contrôle-commande ;
- des chariots-gigognes affectés à une même sortie de tri sont placées de part et d'autre du convoyeur au niveau de cette même sortie.

### Description sommaire des dessins

La présente invention sera mieux comprise et d'autres avantages apparaîtront à la lecture de la description détaillée de modes de réalisation pris à titre d'exemples nullement limitatifs et illustrés par les dessins annexés, dans lesquels :
- La figure 1A est une vue de dessus schématique d'une implémentation particulière d'un équipement de tri selon l'invention ;
- Les figures 1B et 1C représentent des vues de côté de l'équipement de la figure 1A au niveau d'un convoyeur en boucle ;
- La figure 2A est un diagramme résumant le fonctionnement de l'équipement de la figure 1A ; et
- Les figures 2B à 2F représentent des détails au niveau d'un convoyeur en boucle d'un mode de réalisation de l'invention.

### Description d'un mode de réalisation

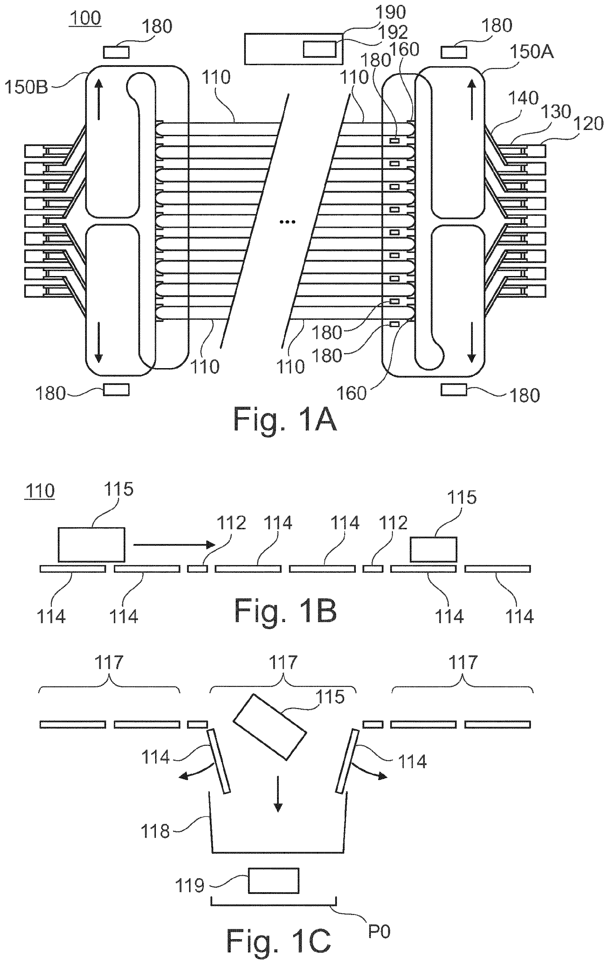

Un mode de réalisation de l'invention est décrit à l'aide des figures 1A à 2F et consiste en un équipement de tri de colis arrivants à un centre de tri tel qu'un centre logistique d'accueil et de redistribution de colis.

La figure 1A illustre schématiquement en vue de dessus l'équipement de tri selon ce mode de réalisation, avec des stations 120 de retournement de containers qui déversent en vrac les colis arrivant en container sur des premiers convoyeurs 130, où ces colis sont égrenés.

En aval des convoyeurs 130, des seconds convoyeurs 140 transfèrent les colis sur l'un de deux convoyeurs à gros débit 150A et 150B en boucle se faisant face.

Des convoyeurs 110 en boucle installées en parallèle les uns aux autres reçoivent chacun les colis transportés par les convoyeurs gros débits 150A et 150B par l'intermédiaire de stations de transferts 160.

Les figures 1B et 1C décrivent une partie de la structure de chacun des convoyeurs 110 en boucle vus de côté, avec une succession d'éléments de convoyage 112 et 114 sur lesquels reposent les colis 115 en déplacement, chaque paire d'éléments 114 étant constituée de deux volets pivotants dans des sens opposés de manière à former une sortie 117 de tri par laquelle les colis 115 à trier peuvent chuter dans des réceptacles 118 comme illustré par la figure 1C.

Chaque sortie de tri est mutualisée entre plusieurs réceptacles 118 dont un seul se trouve à une position P0 de réception des colis.

Selon l'invention, un dispositif 119 d'échange des réceptacles est affecté à chaque sortie (un seul des ces dispositifs est représenté sur la figure 1C) et est configuré pour échanger celui des réceptacles 118 à la position P0 de réception d'une sortie donnée pour un autre des réceptacles 118 mutualisant cette sortie et en attente à proximité immédiate de celle-ci.

Les éléments de l'équipement de tri, et en particulier les convoyeurs 110 en boucles, les volets 114 et les dispositifs 119 d'échange sont contrôlés par une unité 190 de contrôle-commande, qui est en outre capable d'identifier et de suivre les déplacements des colis au sein de l'équipement de tri selon des méthodes connues, basées par exemple sur les vitesses de convoyage de chacun des convoyeurs 130, 140, 150A, 150B et 110.

L'unité de contrôle-commande peut d'associer chaque coli à une adresse de destination, par exemple au moyen de dispositifs 180 d'identification selon toute méthode connus telle que l'analyse d'images des colis, la lecture de codes barres apposés sur les colis ou la communication avec des puces radiofréquences portés par ceux-ci.

Dans ce mode de réalisation particulier, les dispositifs 180 d'identification sont placés le long des convoyeurs à gros débits 150A et 150B pour router de façon fiable les colis sur les convoyeurs en boucles 110, et, optionnellement, le long de ces convoyeurs en boucles 110, comme déterminé par le praticien.

L'équipement de tri est conçu de manière à trier un coli selon le procédé suivant.

Une mémoire informatique 192 de l'unité 190 de contrôle-commande stocke les informations concernant les colis telles que leurs identités et leurs destinations, ainsi qu'un plan de tri qui met en correspondance chaque adresse de destination à une sortie de tri et un réceptacle au sein de l'équipement de tri.

A une étape S0, l'unité de contrôle-commande identifie un coli à trier et son adresse de destination au moyen de l'un dispositif d'identification 180, puis, à une étape S2, détermine la sortie que ce coli doit emprunter ainsi que le réceptacle associé à son adresse de destination afin d'être dirigé vers ce réceptacle, selon le plan de tri stocké.

En réponse à cette détermination, le coli est orienté et suivi au sein de l'équipement de tri selon des méthodes connues au cours d'une étape S4, l'équipement de tri étant configuré pour anticiper l'arrivée du coli à la sortie déterminée au moyen de l'unité 190 de contrôle-commande, qui a déterminé à l'étape S2 quel réceptacle parmi les réceptacles affectés à cette sortie est associé à la destination du coli et qui détermine en outre au cours d'une étape S6 quel réceptacle 118 est un réceptacle courant placé à la position P0 de réception de cette sortie, teste à l'étape S8 si le réceptacle associé à la destination du coli est à la position P0 de réception de cette sortie, et, en réponse à un résultat négatif N à ce test, ordonne au dispositif 119 d'échange affecté à cette sortie de placer le réceptacle associé à la destination du coli à la position P0 de réception à la place du réceptacle courant à une étape S10, le réceptacle nouvellement mis en place devenant le nouveau réceptacle courant.

En réponse à une réponse positive Y au test de l'étape S8 ou à la suite de l'échange de réceptacle de l'étape S10, le système de contrôle commande ordonne à la paire de volet de la sortie déterminée de s'ouvrir afin de laisser chuter le coli dans le réceptacle déterminé correspondant à son adresse de destination à l'étape S14.

Par la suite, après remplissage ou selon tout autre critère déterminé par le praticien, le réceptacle peut être manutentionné en vue des opérations ultérieures de préparation et/ou de transport.

Le procédé peut également comprendre une étape S12 située juste avant l'étape S14, qui teste si le réceptacle déterminé est effectivement en place au moment du passage du coli au niveau de la sortie, et, dans la négative N, bloque l'ouverture des volets de l'étape S14 afin de refaire circuler le coli sur le convoyeur en boucle 110, ramenant de fait le procédé de traitement du coli en amont de l'étape S4.

L'intérêt de cette procédure de recirculation est d'augmenter la robustesse du système, par exemple pour parer à l'absence momentané d'un réceptacle affecté à une certaine adresse ou un certain lot d'adresses de destination ; une telle situation peut arriver lorsqu'un réceptacle plein est en cours de remplacement par un réceptacle vide.

Ainsi, des convoyeurs en boucle sont préférablement utilisés, mais la mise en œuvre de l'invention ne se limite pas à ce type de convoyeur et il reste possible d'employer des convoyeurs autres que des convoyeurs en boucle.

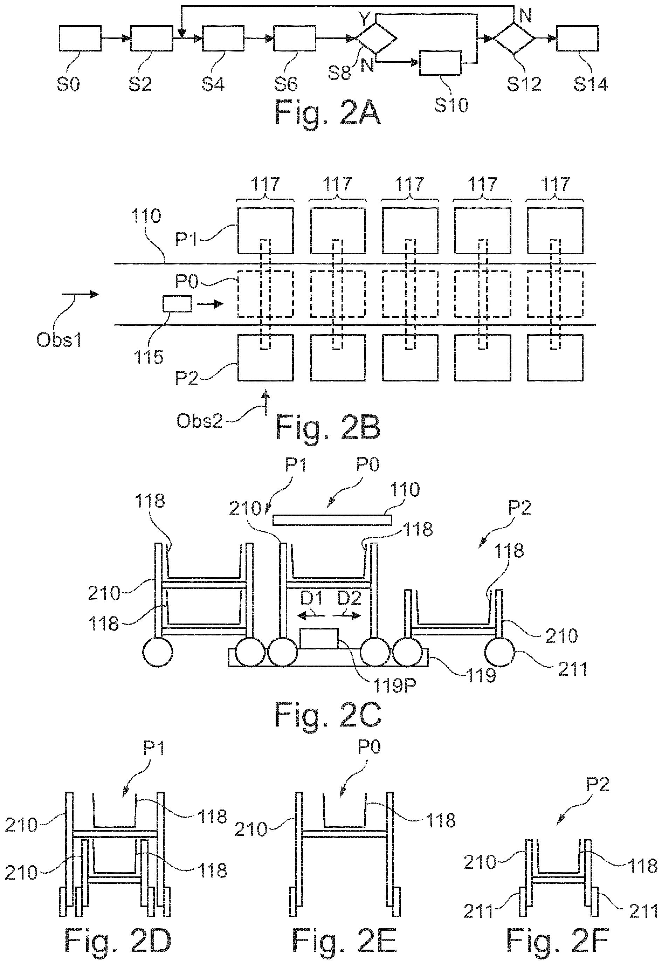

Les figures 2B à 2F illustrent les spécificités du présent mode de réalisation.

Dans ce mode de réalisation, les réceptacles 118 sont des bacs et des chariots gigognes 210 mobiles sur roulettes 211 portant chacun l'un des réceptacles 118 sont localisés sous les sorties de tri, à chaque sortie le long d'un convoyeur en boucle 110 correspondant des positions P0, P1 et P2.

La figure 2C illustre ainsi une vue en coupe du convoyeur 110 en boucle au niveau d'une sortie de tri selon la direction horizontale d'observation Obs1 de la figure 2B, laquelle illustre une portion du convoyeur 110 vu de dessus, avec les chariots gigognes 210, les bacs 118 et le dispositif d'échange 119, les positions P1 et P2 étant situées de part et d'autre du convoyeur et encadrant la position P0 située directement sous une chute de sortie 117 du convoyeur.

Ce positionnement relatif des positions P1, P2 et P3 permet une optimisation de l'utilisation de l'espace, avec une augmentation de densité des réceptacles : pour chaque sortie, un dispositif d'échange 119 s'étend dans une direction transversale au convoyeur au niveau de la sortie considérée et une pluralité de chariots gigognes sont placés au niveau de cette sortie à des positions P0, P1 et P2.

Les dispositifs 119 d'échange de réceptacles sont ici respectivement fixés sous une sortie du convoyeur et configurés de manière à déplacer sélectivement les chariots-gigognes entre la position P0 de réception et les position P1 ou P2 d'attente pour, sur commande de l'unité 190 de contrôle-commande, mettre les réceptacles qu'ils portent respectivement à la position P0 de réception de colis de la sortie correspondante ou les en retirer, au moyen du préhenseur mobile 119P capable de saisir et lâcher les chariots-gigognes 210 et de se déplacer dans deux directions opposées indiquées par les flèches D1 et D2.

Les figures 2D à 2F illustrent l'occupation des trois positions P0, P1 et P2 de la figure 2C selon la direction d'observation Obs2 de la figure 2B.

La figure 2D illustre la capacité qu'ont les chariots-gigognes de se ranger les uns sous les autres avec leurs chargements respectifs, et donc d'optimiser l'usage de l'espace, avec ici deux chariots-gigognes portant des réceptacles à la même position P1 d'attente.

Les figures 2E et 2F illustrent respectivement un chariot-gigogne avec un portage haut à la position P0 de réception de colis et un chariot-gigogne avec un portage bas à la position P2 d'attente, ces deux chariot-gigognes pouvant occuper simultanément la même position P2 lorsque, par exemple, l'un des chariots-gigognes de la position P1 doit être placés à la position P0.

Ainsi, l'échange entre deux réceptacles à la position P0 de réception de colis se fait de préférence en ramenant le réceptacle courant, c'est-à-dire le réceptacle à la position de réception de colis, à sa position P1 ou P2 d'attente, puis en déplaçant le réceptacle sélectionné par l'unité de contrôle commande pour accueillir un coli arrivant à la sortie de sa position P1 ou P2 d'attente à la position P0 de réception de colis, où il devient le nouveau réceptacle courant.

Changer le réceptacle courant d'une sortie de tri de façon dynamique, en fonction des colis à trier arrivant à cette sortie apporte plusieurs avantages.

En pratique, on constate lors d'un tri de colis en fonction de leurs adresses de destination que peu de colis sont adressés à certaines adresses, et les réceptacles associés à de telles adresses sont en conséquence peu utilisés.

Conventionnellement, un réceptacle, même peu utilisé, est statique sous une sortie et monopolise donc cette sortie qui est donc elle aussi peu utilisée, ce qui maintien une partie de l'équipement de tri en situation de sous-utilisation.

Selon l'invention, plusieurs réceptacles mutualisent une sortie, un seul réceptacle étant un récepteur courant à la position de réception, c'est-à-dire en position de recevoir les colis empruntant cette sortie, les autres étant en position d'attente.

Ainsi, contrairement à la situation conventionnelle, un réceptacle peu utilisé ne monopolise pas une sortie physique, et un réceptacle occupera la position de réception en proportion du nombre de colis qu'il reçoit, ce qui, en soi, permet une augmentation du taux d'utilisation de l'équipement, avec des impacts positifs sur les plans de l'emprise au sol, des coûts et du retour sur investissement pour une capacité donnée de l'équipement de tri.

En outre, la réduction du nombre de sorties physique (fixes) pour un nombre donné de sorties logiques (les réceptacles mobiles) facilite la logistique de manutention des réceptacles en sorties de tri.

## Revendications

1. Equipement (100) de tri de colis comprenant un convoyeur (110) sur lequel des colis (115) à trier sont convoyés, sous contrôle d'une unité (190) de contrôle-commande, vers des réceptacles (118) situés au niveau de sorties (117) de tri et correspondant à des adresses de destination desdits colis, les sorties de tri étant réparties le long du convoyeur, dans lequel chaque sortie de tri est mutualisée entre plusieurs des réceptacles dont un seul se trouve à une position (P0) de réception des colis, **caractérisé en ce qu'**un dispositif (119) d'échange des réceptacles est affecté à chaque sortie et est configuré pour échanger celui des réceptacles à la position de réception d'une sortie donnée pour un autre des réceptacles mutualisant cette sortie, et **en ce que** l'équipement de tri anticipe l'arrivée d'un coli à cette sortie au moyen de l'unité de contrôle-commande qui détermine quel réceptacle parmi les réceptacles affectés à cette sortie est associé à une destination du coli et quel réceptacle est un réceptacle courant placé à la position de réception de cette sortie, qui teste si le réceptacle associé à la destination du coli est le réceptacle courant, et, en réponse à un résultat négatif à ce test, ordonne au dispositif d'échange affecté à cette sortie de placer le réceptacle associé à la destination du coli à la position de réception à la place du réceptacle courant.

2. L'équipement de tri selon la revendication 1, **caractérisé en ce que** le convoyeur (110) est un convoyeur en boucle.

3. L'équipement de tri selon l'une quelconque des revendications précédentes, **caractérisé en ce que**, pour chaque sortie, des chariots gigognes (210) portant chacun l'un des réceptacles (118) sont situés sous les sorties de tri, et **en ce que** les dispositifs (119) d'échange de réceptacles sont configurés de manière à déplacer sélectivement les chariots-gigognes pour mettre lesdits réceptacles à la position (P0) de réception de colis de la sortie correspondante sur commande de l'unité (190) de contrôle-commande.

4. L'équipement de tri selon la revendication 3, **caractérisé en ce que** des chariots-gigognes affectés à une même sortie de tri sont placées de part et d'autre du convoyeur au niveau de cette même sortie.

## Patentansprüche

1. Sortierausrüstung (100) für Pakete, umfassend einen Förderer (110), auf dem die zu sortierenden Pakete (115) befördert werden, unter der Steuerung einer Steuerbefehlseinheit (190), zu Behältern (118), die auf Höhe der Sortierausgänge (117) angeordnet sind und Zieladressen der genannten Pakete entsprechen, wobei die Sortierausgänge entlang des Förderers verteilt sind, wobei jeder Sortierausgang für mehrere Behälter gemeinsam genutzt wird, von denen sich ein einziger in einer Position (P0) zum Aufnehmen von Paketen befindet, **dadurch gekennzeichnet, dass** eine Vorrichtung (119) zum Austauschen der Behälter jedem Ausgang zugeordnet ist und dafür ausgelegt ist, um jenen der Behälter in der Aufnahmeposition eines gegebenen Ausgangs für einen anderen Behälter auszutauschen, der diesen Ausgang gemeinsam nutzt, und dadurch, dass die Sortierausrüstung die Ankunft eines Pakets an diesem Ausgang mit Hilfe der Steuerbefehlseinheit antizipiert, die bestimmt, welcher Behälter unter den Behältern, die diesem Ausgang zugeordnet sind, mit einem Ziel des Pakets assoziiert ist, und welcher Behälter ein aktueller Behälter ist, der in der Aufnahmeposition dieses Ausgangs platziert ist, die testet, ob der Behälter, der mit dem Ziel des Pakets assoziiert ist, der aktuelle Behälter ist, und, als Reaktion auf ein negatives Ergebnis dieses Tests, die Austauschvorrichtung, die diesem Ausgang zugeordnet ist, anweist, den Behälter, der mit dem Ziel des Pakets assoziiert ist, anstelle des aktuellen Behälters in die Aufnahmeposition zu platzieren.

2. Sortierausrüstung nach Anspruch 1, **dadurch gekennzeichnet, dass** der Förderer (110) ein Schleifenförderer ist.

3. Sortierausrüstung nach einem der vorhergehenden Ansprüche, **dadurch gekennzeichnet, dass** für jeden Ausgang ineinanderstellbare Wägen (210), die jeweils einen der Behälter (118) tragen, unter den Sortierausgängen angeordnet sind, und dadurch, dass die Vorrichtungen (119) zum Austauschen der Behälter dafür ausgelegt sind, um selektiv die ineinanderstellbaren Wägen zu verschieben, um die genannten Behälter in die Position (P0) zum Aufnehmen der Pakete des entsprechenden Ausgangs auf Befehl der Steuerbefehlseinheit (190) zu versetzen.

4. Sortierausrüstung nach Anspruch 3, **dadurch gekennzeichnet, dass** die ineinanderstellbaren Wägen, die demselben Sortierausgang zugeordnet sind, auf beiden Seiten des Förderers auf der Höhe dieses selben Ausgangs platziert sind.

## Claims

1. A parcel-sorting facility (100) comprising a conveyor (110) on which parcels (115) to be sorted are conveyed, under the control of a monitoring and control unit (190), towards receptacles (118) situated at sorting outlets (117) and corresponding to destination addresses of said parcels, the sorting outlets being distributed along the conveyor, in which facility each sorting outlet is shared between a plurality of receptacles, only one of which is in a parcel-receiving position (PO), said parcel-sorting facility being **characterized in that** a receptacle exchanger device (119) for exchanging receptacles is assigned to each outlet, and is configured for exchanging that one of the receptacles that is in the receiving position at a given outlet with another of the receptacles sharing said outlet, and **in that** the parcel-sorting facility anticipates the arrival of a parcel at said outlet by means of the monitoring and control unit that determines which receptacle from among the receptacles assigned to said outlet is associated with a destination of the parcel and which receptacle is a current receptacle placed in the receiving position of said outlet, that tests whether the receptacle associated with the destination of the parcel is the current receptacle, and, that responds to the test producing a negative result by ordering the exchanger device assigned to the outlet to place the receptacle associated with the destination of the parcel in the receiving position in place of the current receptacle.

2. The parcel-sorting facility according to claim 1, **characterized in that** the conveyor (110) is a looped conveyor.

3. The parcel-sorting facility according to any preceding claim, **characterized in that**, for each outlet, nesting trolleys (210), each of which carries one of the receptacles (118), are situated under the sorting outlets, and **in that** the receptacle exchanger devices (119) are configured in such a manner as to move the nesting trolleys selectively so as to put said receptacles in the receiving positions (P0) for receiving parcels from the corresponding outlets on being controlled by the monitoring and control unit (190).

4. The parcel-sorting facility according to claim 3, **characterized in that** nesting trolleys assigned to a same sorting outlet are placed on either side of the conveyor at said same outlet.
